# EUROPEAN PATENT APPLICATION

(11) **EP 2 204 297 A2**
(43) Date of publication of application: **07.07.2010**
(21) Application number: 09380186.8
(22) Date of filing: 15.12.2009
(51) Int. Cl.: B60H 1/00

(54) **Mounting system of an air conditioning equipment in a vehicle front dashboard**

(30) Priority: 30.12.2008 ES 200803755
(71) Applicant: Seat, S.A., 08760 Martorell, Barcelona (ES)
(72) Inventor: Perez Perez, Fernando Jesús, 08760 Martorell - Barcelona (ES); Martos Ortega, Antonio, 08760 Martorell - Barcelona (ES); Peña Martinez, José, 08760 Martorell - Barcelona (ES)
(74) Representative: Carvajal y Urquijo, Isabel

(57) **Abstract**

Mounting system of the air conditioning equipment in the front dashboard of a vehicle, consisting of joining the conditioner to the dashboard (1), before the mounting of said dashboard in the vehicle, through an intermediate distributor (2) consisting of a chamber which is joined on one side to the conditioner, and on the opposite side to the dashboard, through anchor rods (14).

## Description

### Field of the invention

The present invention refers to a mounting system of the air conditioning equipment in the front dashboard a vehicle, together with the conduction hoses for the hot or cold air supplied by the different diffusers of the dashboard, through which said air is directed to the vehicle interior.

### Background of the invention

In order to mount the air conditioner in the front dashboard of a vehicle, as well as the hoses which conduct the air supplied by the air conditioner to the dashboard diffusers, the following steps are taken: first, the vehicle dashboard is mounted in the front part thereof, and next, the air conditioner is mounted into the dashboard, to which it is fixed by screwing-in, welding, etc. The hoses are mounted between the air conditioner and the dashboard diffusers, hoses which are in charge of conducting the air to said diffusers.

The process described is long and laborious, since the space in which the worker must move to adjust and join the different components is quite limited. On the other hand, the fixing system does not provide the optimum rigidity to the heater-dashboard assembly. The joining between these components affects the stability of the assembly and can produce tolerances, thus causing undesirable noises.

### Description of the invention

The object of the present invention is to eliminate the aforementioned problems through a mounting system which does not present space problems for the workers and enables to obtain a rigid and safe fixing between conditioner and dashboard, eliminating risks of noise and mismatches between conditioner, dashboard and air conduction hoses.

According to the system of the invention, the mounting and fixing of the conditioner in the dashboard is carried out outside the vehicle, so that the necessary operations are performed with enough space for the workers to have absolute freedom of movement.

On the other hand, since these mounting operations are carried out outside the vehicle, they can be performed with more safety, both in the adjustment of the components and in joining them.

According to the invention, the joining of the dashboard conditioner, outside the vehicle, is carried out through an intermediate distributor which is joined both to the conditioner and to the dashboard. This intermediate element or component between the conditioner and the dashboard enables to solve problems of air distribution inside the vehicle, absorbs tolerances and also grants greater sturdiness and stability to the assembly, eliminating noises.

The aforementioned intermediate distributor, which is located between the heater and the dashboard, will facilitate the joining between these two components.

The intermediate distributor consists of a chamber which flows on the one hand through openings in a flat base which is attached and fixed to the conditioner outlet, while on the opposite side it has as many outlets as the number of air diffusers the dashboard has, being these inlets connected to the diffusers through air conduction hoses.

The chamber which constitutes the distributor arranged between the conditioner and dashboard has lugs with holes for the passage of anchor rods, the rods belonging to fixing supports protruding in a position facing the rear surface of the dashboard.

The chamber forming the air distributor can have equal number of outlets and inlet openings, there existing between them, inside the chamber, partitions which limit passages between said openings and orifices.

To ensure the mounting and coupling of the hoses, the outlet orifices of the air distributor form, from the free edge, an inner box in which the end of the air conduction hose couples.

The anchor rods which serve as a fixing means of the air distributor to the distributor are joined to the lugs of said distributor and to the dashboard, once the mounting has started, through fusion of the rods. In this way, there will be a leak-tight joining and a compact and united block and a dashboard assembly is obtained, which is ready for mounting in one step, with a sturdy architecture, a safe mounting process without any risks of dismounting or noise.

### Brief description of the drawings

The mounting system of the invention is represented in the attached drawings, in which:
Figure 1 is an elevation rear view of a dashboard in which the mounting system of the invention of the air conditioner is shown.
Figure 2 is an elevation side view of the dashboard of figure 1, in direction A of figure 1.
Figure 3 is an exploded perspective view of the different components used in the mounting system of the invention.
Figure 4 is a perspective view of the air distributor used as a joining element between the conditioner and the front dashboard of the vehicle.
Figure 5 is a rear perspective view of the same distributor.

### Detailed description of an embodiment

The characteristics and advantages of the system of the invention will be understood better with the following description, referring to the attached drawings, which correspond to the mounting of an air conditioner in the front dashboard of a vehicle, according to the system of the invention.

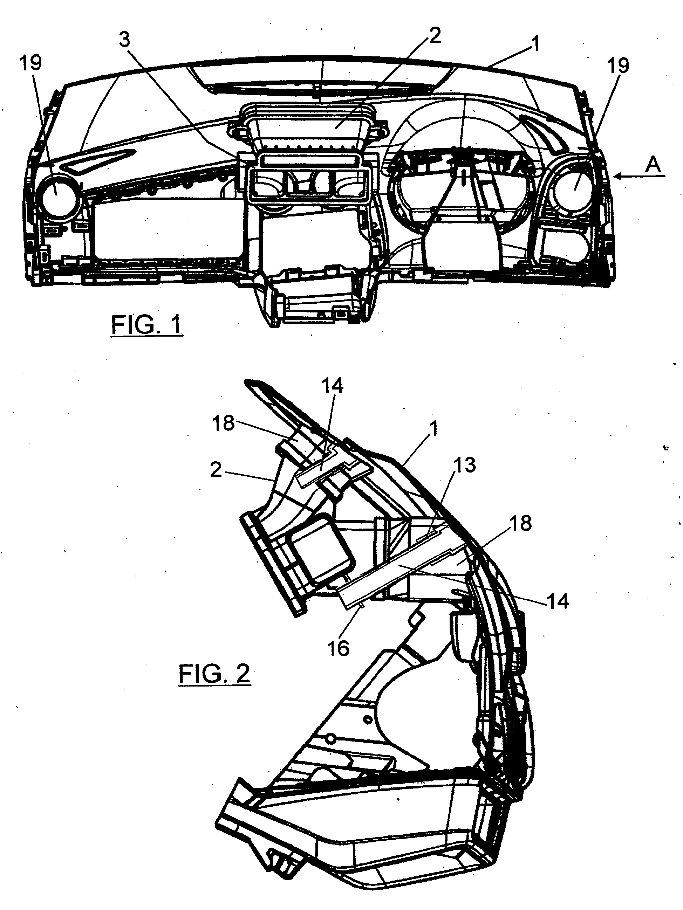

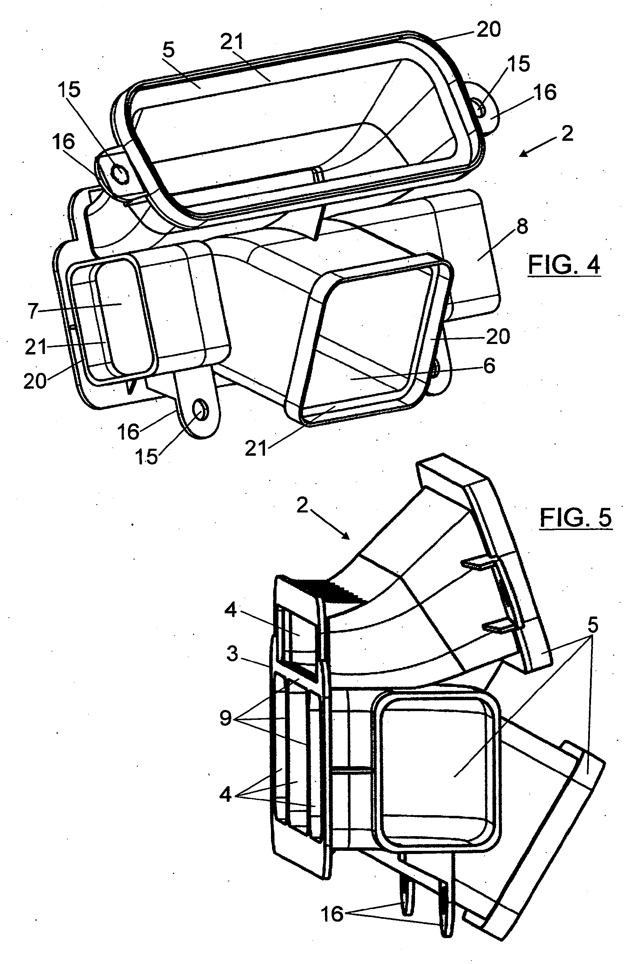

Figures 1 and 2 show an elevation rear and side view of the front dashboard 1 of a vehicle in which the air conditioner will be mounted, not represented. The mounting of this conditioner, according to the system of the invention, is carried out through an air intermediate distributor 2 which, as it can be seen better in figures 4 and 5, consists of a chamber which ends on one side in a flat base 3 into which it flows through the openings 4, all of them located in the same plane of the base 3. In the example represented in the drawings the chamber has four of these openings. On the opposite side the chamber has an equal number of orifices which are indicated by numbers 5, 6, 7 and 8.

Between the openings 3 and the orifices 5 there are intermediate partitions 9 which limit passages which will serve to direct the air current from the openings 4 to the orifices 5 to 8.

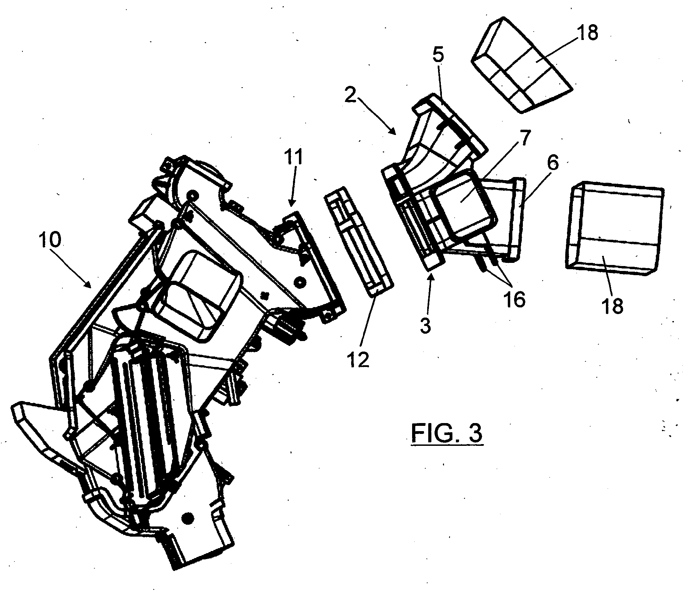

As it can be seen in figure 3, the air distributor 1 is placed between the air' conditioning equipment 10 and the dashboard 1. To that end, the intermediate distributor 2 is coupled, through the flat base 3, at the outlet 11 of the conditioning equipment, having a gasket 12 between them. The joining of the intermediate distributor 2 to the conditioning equipment 10 can be performed by welding, screwing-in, etc.

The joining of the intermediate distributor 2 to the dashboard 1 is carried out by fixing supports 13, which are fixed by the rear surface of the dashboard 1 and include a rod 14 which will be inserted through holes 15, figures 4 and 5 which present lugs 16 which outwardly protrude from the walls of the chamber forming the intermediate distributor.

Once the assembly has been mounted, the rods 14 can be casted so that they are joined by welding both to the lugs 16 of the intermediate distributor 2 and to the dashboard 1.

From the intermediate distributor 2 the air is directed to the dashboard 1 diffusers through hoses 18, figures 2 and 3.

In the example represented in the drawings, the outlet orifice 5 will be connected to the indirect or upper ventilation diffuser of the vehicle dashboard, the outlet orifice 6 will be connected to the central diffuser of the dashboard, and outlet orifices 7 and 8 will be connected to the lateral diffusers 19 of said dashboard, all of which is carried out through the corresponding hoses.

As the intermediate diffuser 2 has equal number of inlet holes 4 and outlet orifices, connected through the corresponding passages limited by the partitions 9, said distributor, besides serving as a joining part or element between the conditioning equipment 10 and the dashboard 1, serves as means of air distribution to the dashboard diffusers, although as it can be understood, the intermediate diffuser can have a greater number of outlet orifices and inlet openings.

The conditioning equipment will supply cold or hot air which will go through the intermediate diffuser 2 until reaching the dashboard diffusers.

As it can be appreciated better in figure 4, the outlet orifices form, in the mouth, a box or inner bell mouth 20, delimited inside by a step 21. In this box 20 the corresponding end of the hoses is pressure inserted until they rest on the inner step 21, thus attaining a good fit which will prevent any undesired air leak of the air supplied by the conditioning equipment 10.

With the constitution described, an assembly is obtained, formed by the dashboard 1, intermediate distributor 2 and air conditioner 10, with a leak-tight joining between them and forming a compact block, ready for mounting in one step inside the vehicle, with a sturdy architecture, designed through a safe mounting process without any risks of dismounting or noise.

## Claims

1. Mounting system of the air conditioning equipment in the front dashboard of a vehicle, **characterized in that** the conditioner is joined to the dashboard, before the mounting of said dashboard in the vehicle, through an intermediate distributor consisting of a chamber which flows on one side through openings located in a flat base, which is attached and fixed to the outlet of the conditioner, while on the side opposite to said chamber it has as many outlet orifices as air diffusers has the dashboard, these orifices and diffusers being connected through air conduction hoses; having the aforementioned chamber outer lugs with holes for the passage of anchor rods belonging to fixing supports which protrude in a position opposite the rear surface of the dashboard.

2. System- according to claim 1, **characterized in that** the chamber forming the intermediate distributor has the same number of outlet orifices and inlet openings, there existing between them, on the inside of the chamber, partitions which limit conduction passages between said openings and orifices.

3. System according to claims 1 and 2, **characterized in that** outlet orifices form, from the free edge, a box limited by an inner step, in the box of which the end of the aforementioned hoses is coupled.

4. System according to claim 1, **characterized in that** the anchor rods are joined to the distributor lugs and dashboard through fusion of said rods.

5. System according to claims 1 to 3, **characterized in that** the distribution chamber has four outlet orifices, two lateral ones which are connected to the lateral diffusers of the dashboard, and two intermediate ones, an upper one which is connected to the indirect or upper ventilation diffuser of the dashboard, and a lower one which is connected to the central diffuser of said dashboard.
